# EUROPEAN PATENT APPLICATION

(11) **EP 2 034 589 A2**
(43) Date of publication of application: **11.03.2009**
(21) Application number: 08160618.8
(22) Date of filing: 17.07.2008
(51) Int. Cl.: H02K 1/27

(54) **Rotor of brushless motor**

(30) Priority: 25.10.2007 KR 20070107665; 16.08.2007 EP 07114432
(71) Applicant: Jeung, Young-Chun, Cypress, CA 90630 (US)
(72) Inventor: Jeung, Young-Chun, Cypress, CA 90630 (US)
(74) Representative: Rupp, Christian

(57) **Abstract**

Some embodiments of the present disclosure provide a rotor of an electric brushless motor configured to be light weight and prevent vibrations generated during an operation of the motor to be transferred to the shaft of the rotor. The rotor comprises a shaft (4) elongated in a rotational axis, a single body magnet (1) comprising alternately magnetized portions, and a vibration absorption portion (3) interposed between the shaft (4) and single body magnet (1). The vibration absorption portion (3) absorbs vibrations generated during the operation of the motor and may comprise an elastic or a non-elastic material. The rotor further comprises a non-elastic portion (2) inhibiting the expansion of the vibration absorption portion (3) when the vibration portion is elastic.

## Description

### CROSS-REFERENCE TO RELATED APPLICATIONS

### BACKGROUND

### Field

The present disclosure relates to an electric motor.

### Description of the related technology

Generally a rotor of an electric brushless motor uses a permanent magnet and a rotor core of a ferromagnetic bulk or an electric steel sheet in order to form a magnetic circuit. However, when the permanent magnet rotor generates a rotation torque due to its interactions with an alternating magnetic field of a stator, there are vibrations generated in air gaps between the rotor and the stator. These vibrations can amplify to noise and/or be transferred to the load of the motor to cause damage or inefficiencies. Also, the weight of the ferromagnetic bulk or electric steel used as rotor core increases the weight of the motor and reduces efficiency in the application of the motor.

The foregoing discussion in this section is to provide general background information, and does not constitute an admission of prior art.

### SUMMARY

Some embodiments of the present disclosure provide a rotor of an electric brushless motor configured to be light weight and prevent vibrations during the operation of the motor to be transferred to the shaft of the rotor. The brushless motor may comprise an embodiment of the rotor of the disclosure and a stator comprising at least two electric magnets. One embodiment of the rotor comprises a shaft elongated in a rotational axis, a single body magnet comprising alternately magnetized portions, and a vibration absorption portion interposed between the shaft and single body magnet.

The single body magnet may comprise a ring magnet surrounding at least a portion of the shaft, wherein the ring magnet comprises two or more annular magnet portions arranged along the axis and comprises a plurality of poles extending generally parallel to each other. In other embodiment, the single body magnet comprises a C shaped cross-section taken in a plane perpendicular to the axis. In another embodiment, the single body magnet does not form a closed loop surrounding the shaft, wherein the rotor further comprises one or more additional single body magnets, each additional single body permanent magnet comprising alternately magnetized portions. The single body magnets are arranged so as to surround at least a portion of the shaft and they are arranged along the axis.

In one embodiment, the vibration absorption portion comprises an annular body and may surround the shaft. In other embodiment, the vibration absorption portion may not be annular while being interposed between the shaft and the single body magnet. The vibration absorption portion may engage with the shaft. The portion further comprises an engagement enhancing layer fixed to a circumference of the shaft, wherein the vibration absorption portion is engaged with the shaft via the engagement enhancing layer.

Another embodiment of the disclosure the vibration absorption portion comprises an elastic material. This embodiment further comprises a non-elastic portion interposed between the single body magnet and the vibration absorption portion, wherein the non-elastic portion does not comprise an elastic material. The non-elastic portion may be annular and surrounding the vibration absorption portion. In other embodiments, the non-elastic portion may not be annular while being interposed between the single body magnet and the vibration absorption portion. Also the non-elastic portion may comprise a ferromagnetic material or a non-ferromagnetic material.

In one embodiment the rotor may further comprise a non-elastic portion interposed between the single body magnet and the vibration absorption portion, wherein the non-elastic portion is substantially non-elastic and configured to minimize transferring of a force of radial expansion of the vibration absorption portion to the single body magnet while the rotor is rotating. The non-elastic portion may be engaged with the single body magnet, wherein the non-elastic portion comprises at least one of protrusion and recess on an outer circumference, wherein the single body magnet comprises at least one counterpart configuration configured to engage with the at least one of protrusion and recess.

In another embodiment when the vibration absorption portion comprises an elastic material, the rotor further comprises a non-elastic portion interposed between the single body magnet and the vibration absorption portion, wherein the non-elastic portion comprises one or more annular layers. The non-elastic portion may be engaged with the vibration absorption portion, wherein the non-elastic portion comprises at least one of protrusion and recess on an inner circumference, wherein the vibration absorption portion comprises at least one counterpart configuration configured to engage with the at least one of protrusion and recess.

In an embodiment of the rotor, the vibration absorption portion is substantially free of an elastic material. The vibration absorption portion may comprise a pored structure, wherein the pored structure comprises a plurality of networked walls defining pores.

### BRIEF DESCRIPTION OF THE DRAWINGS

The above and/or other aspects and advantages of the present disclosure will become apparent and more readily appreciated from the following detailed description, taken in conjunction with the accompanying drawings of which:
Fig. 1 is a perspective view of the rotor of a brushless motor according to an embodiment of the disclosure;
Fig. 2 is a cross-sectional view of the rotor of Fig. 1 in a plane passing through the II axis;
Fig. 3 is a cross-sectional view of the rotor of Fig. 1 in a plane passing through the III axis;
Fig. 4 illustrates a magnetic circuit of the rotor and a stator of the motor according to an embodiment of the disclosure;
Fig. 5 is a perspective view of the rotor of a brushless motor according to another embodiment of the disclosure;
Fig. 6 is a cross-sectional view of the rotor of Fig. 5
Fig. 7 is a perspective view showing an assembled model of the rotor of a brushless motor according to an embodiment of the disclosure;
Fig. 8 is an exploded perspective view showing the assembly of the rotor of Fig. 7;
Fig. 9 is a cross-sectional view showing the assembly of the rotor of Fig. 7;
Fig. 10 is a cross-sectional view showing the assembly of the rotor in another embodiment.
Figs. 11A through 11C are illustrations showing comparison of vibration absorption between conventional techniques and an embodiment of the embodiment.

### DETAILED DESCRIPTION OF THE DRAWINGS

Reference will now be made in detail to embodiments of the present invention, examples of which are illustrated in the accompanying drawings, wherein like reference numerals refer to the like elements throughout.

Some embodiments of the present disclosure provide a rotor of an electric brushless motor. The method of making the electric motor comprises providing a rotor of the disclosure and a stator comprising a plurality of stator poles and assembling the rotor and the stator such that the rotor is to rotate relative to the plurality of the stator poles.

The rotor comprises a ring magnet completing magnetic circuits with a stator of the motor to operate the brushless motor, without an addition of a heavy ferromagnetic core to complete the magnetic circuits. The rotor is configured to be light weight and maximize the motor's power to weight ratio. The rotor comprises a vibration absorption portion comprising a vibration absorbing resin. The vibration absorption portion of the rotor is configured to absorb the vibration caused by an unbalance in magnetic flux densities of gaps in the motor and magnetic vibration caused by pole shift of a stator in the motor. The vibration absorption portion of the rotor is configured to prevent the vibration from being delivered to a shaft of the rotor and subsequently to a load of the motor. The rotor further comprises a non-elastic portion between the single body magnet and the vibration absorption portion to inhibit the thermal expansion of the vibration absorption portion that may cause damage to the single body magnet.

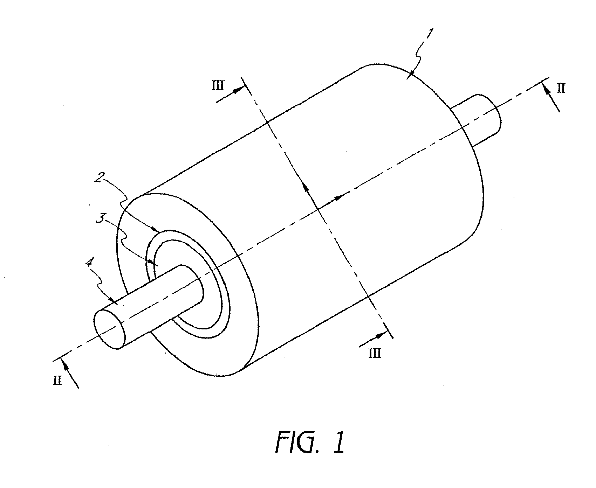

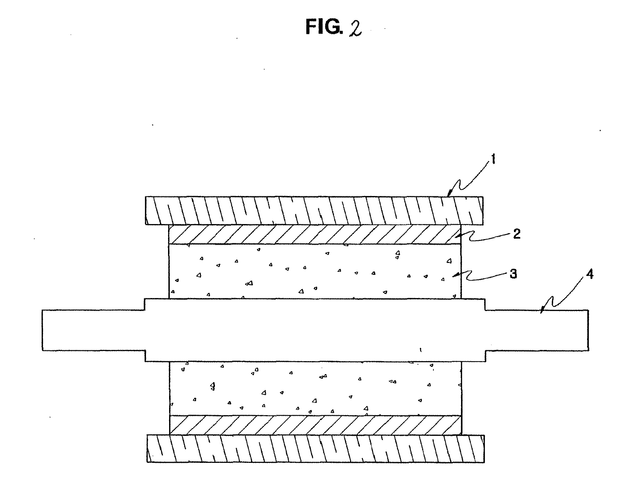

Figs. 1 and Fig. 2 illustrate the rotor of a brushless motor. Fig.1 as shown is a perspective view of the rotor. In the embodiment as shown in Fig.1, the rotor comprises single body magnet 1, a non-elastic portion 2, a vibration absorption portion 3, and a shaft 4. Two imaginary axes are illustrated in Fig. 1 for defining orientation of cross-sections to follow. Axis II is an axis coinciding with the rotational axis of the shaft 4. Axis III is an axis perpendicular to axis II that lies in the midpoint of the rotor in the longitudinal direction.

Fig. 2 is a cross-section of the rotor in a plane passing through the axis II. In the illustrated embodiment, the shaft 4 is surrounded by the vibration absorption portion 3. Subsequently, the vibration absorption portion 3 is surrounded by the non-elastic portion 2 and finally the non-elastic portion 2 is surrounded by single body magnet 1.

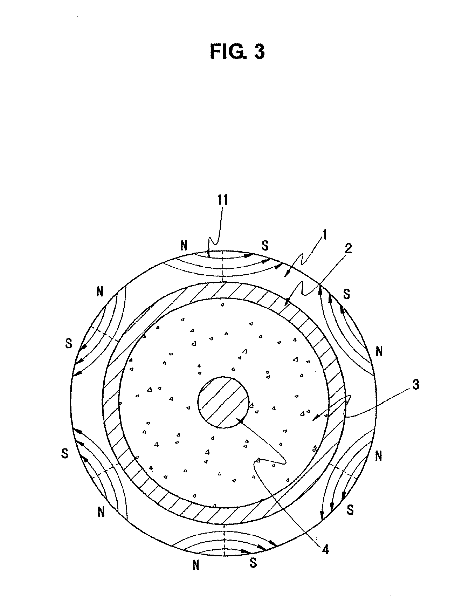

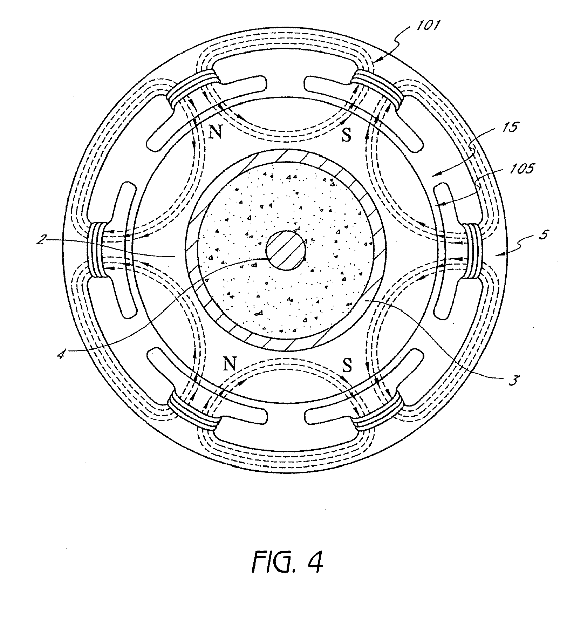

Fig. 3 and Fig. 4 illustrate the magnetic circuit forming in the single body magnet during the operation of the brushless motor. Fig. 3 is a cross-section of the rotor in the plane passing through the axis III in Fig. 1. Magnetic flux fields 11 are formed inside the single body magnet 1 with the electromagnets of the stator. There is a plurality of poles formed on the single body magnet, where the poles are extending generally parallel to each other as shown.

Fig. 4 is a cross-section showing the complete magnetic circuit between the rotor and the stator 5 of the motor comprising at least two electric magnets are shown together in the plane passing through axis III of the rotor of Fig. 1. The magnetic field 101 is formed within the stator 5 and the single body magnet 1 of the rotor during the operation of the motor. The single body magnet 1 allows the magnetic field 101 to be formed without an addition of the substantially heavy ferromagnetic core. During the operation of the motor, there are vibrations caused by unbalance among magnetic flux densities of slots 15 in the stator and the gaps 105 between the stator and the rotor. There are also magnetizing vibration caused by pole shifts of the stator. When these vibrations are transferred to the shaft of the rotor and consequently to the load, the vibration can amplify to noise and may further amplify into resonance noise. This may increase the stress on the bearings of the motor and reduce the operational life time of the motor. The vibration absorbing portion absorbs these vibrations and minimizes the vibrations from being transferred to the shaft.

### Shaft

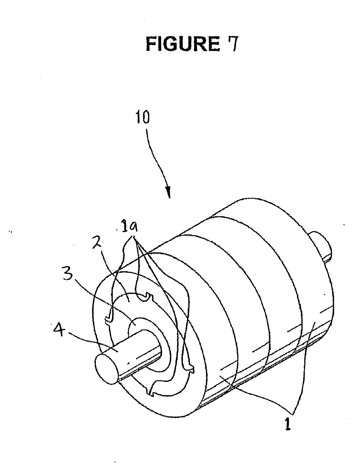

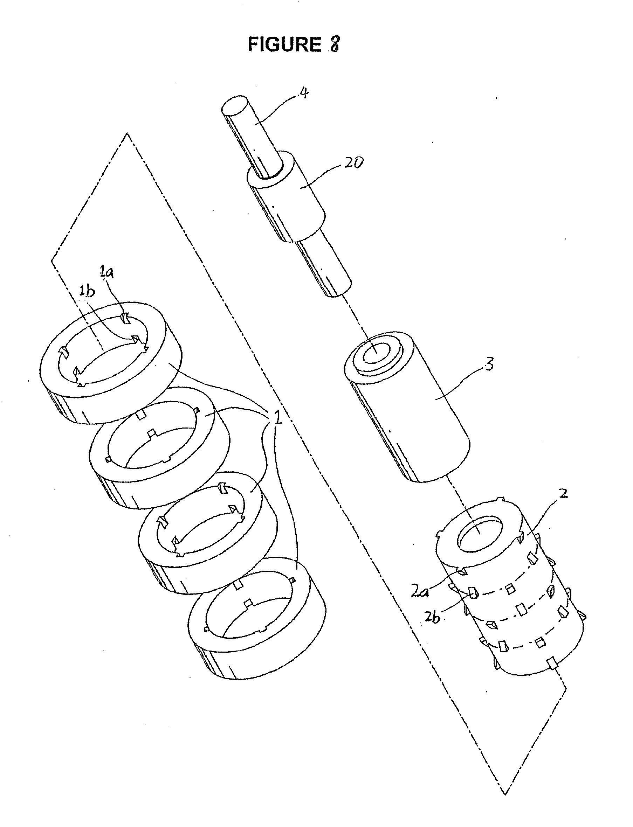

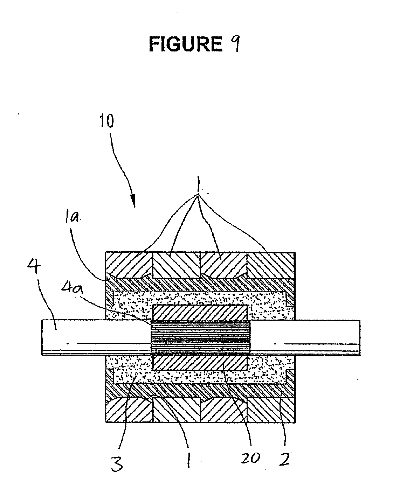

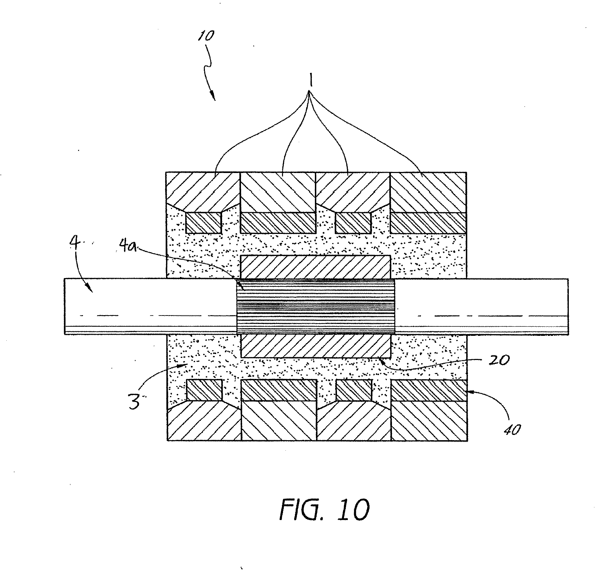

In the illustrated embodiment of the assembled rotor 10 as shown in Figs. 7 through 10, the shaft 4 is a solid rod. In other embodiments the shaft may be a hollow tube. The cross-section may be circular or other shapes. The shaft is configured to rotate along a pivot and consequently drive the rotor 10 to rotate. In one illustrated embodiment as shown in Fig. 10 the roughened surface 4a on the surface of the shaft 4 so as to promote better adhesion of additional layers that may form around the shaft. In one of the embodiments a plastic engagement enhancing layer 20 may be injection molded around the roughened surface 4a of the shaft 4 configured to provide better adhesion of additional portions to be formed. The shaft 4 comprises a high strength and durable material. Examples include material such as metal, high strength plastic, etc.

### Vibration absorption portion

In the illustrated embodiment as shown in Figs. 7 through 10, vibration absorption portion 3 includes an annular body and is interposed between the shaft 4 and the single body magnet 1. The vibration absorption portion 3 contacts and is engaged with the shaft 4. In some embodiments the vibration absorption portion 3 is integrated with the shaft 4 via the engagement enhancing layer 20 fixed to the circumference of the shaft 4 so as to form the vibration absorption 3 portion around the shaft 4. In another embodiment the vibration absorption portion 3 comprises one more annular layers of identical or different material. In other embodiments the vibration absorption portion 3 is not annular while being interposed between the shaft 4 and the single body magnet 1.

The vibration absorption portion 3 comprises light weight, noise and vibration absorbing material. In one of the embodiments the vibration absorption portion comprises an elastic material. The examples include rubber, resin such as silicon, etc. The resin is injection molded to form the vibration absorption portion 3. When the vibration absorption portion 3 comprises an elastic material, a non-elastic portion 2 is provided outside the vibration absorption portion 3, wherein the non-elastic portion 2 does not comprises an elastic material, wherein the single body magnet 1 is subsequently engages with the non-elastic portion 2.

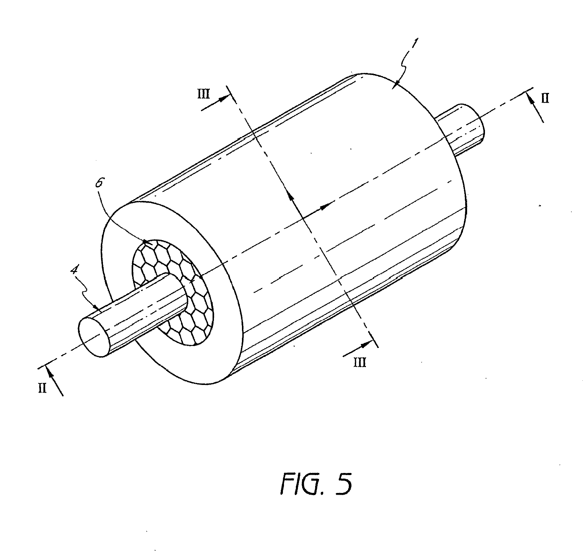

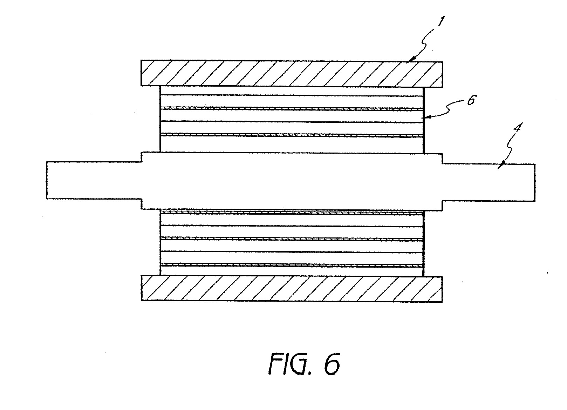

In another embodiment the vibration absorption portion is substantially free of an elastic material. As shown in Fig. 5 and 6, the vibration absorption portion comprises a pored structure 6, wherein providing the vibration absorption portion outside the shaft comprises engaging the pored structure with the shaft 4 with or without an engagement enhancing layer 20 between the shaft 4 and vibration absorption portion. The porous structure 6 comprises a plurality of networked walls defining pores. The examples of the material include honeycombed or corrugated paper, wood, ceramic, etc. This portion may be fixed to the shaft 4 by via adhesives. When the vibration absorbing portion 6 comprises material substantially free of being elastic as mentioned, the foregoing non-elastic portion can be omitted from the configuration of the rotor 10.

### Non-elastic portion

In the illustrated embodiments as shown in Figs. 7 through 10, the rotor 10 comprises non-elastic portion 2 interposed between the single body magnet 1 and the vibration absorption portion 3, wherein the non-elastic portion does not comprise an elastic material. The non-elastic portion 2 is substantially non-elastic and configured to minimize transferring of a force of radial expansion of the vibration absorption portion 3 to the single body magnet 1 while the rotor 10 is rotating. The non-elastic portion 2 may comprise one or more annular layers. In one embodiment the non-elastic portion 2 may be annular and surrounding the vibration absorption portion 3. The non-elastic portion 2 may comprise a cylindrical portion, wherein providing the non-elastic portion outside the vibration absorption portion 3 comprises arranging the non-elastic portion 2 and the shaft 4 such that the non-elastic portion and the shaft define a space therebetween and elastic material is injected into the space to form the vibration absorption portion 3. In other embodiment the non-elastic portion 2 is not annular while being interposed between the single body magnet 1 and the vibration absorption portion 3.

The non-elastic portion 2 is engaged with the vibration absorption portion 3. The non-elastic portion 2 comprises at least one of protrusion and recess on an inner circumference, wherein the vibration absorption portion 3 comprises at least on counterpart configuration configured to engage with at least one of protrusion and recess. The non-elastic portion 2 is configured to be engaged with the single body magnet 1 as well. The non-elastic portion 2 comprises at least one of protrusion 2a and 2b on the outer circumference, wherein the single body magnet 1 comprises at least one counterpart configuration, indentations 1a and 1b, configured to engage with the at least on protrusion 2a and 2b.

Some embodiments comprise a ferromagnetic material for the non-elastic portion 2. Other embodiments do not comprise a ferromagnetic material. Characteristics of the material used are high strength, heat resistant, and having low thermal expansion coefficient. The non-elastic portion 2 comprising low thermal expansion coefficient material is configured to inhibit the expansion of itself and the expansion of the vibration absorption portion 3 during an operation of motor. The expansion of the two portions may occur due to thermal expansion of the materials due to heat produced during operation of the motor. Some examples used for non-elastic portion 2 include a plastic material or a metal such as aluminum.

In the illustrated embodiment as shown in Figs. 7 through 9, when the non-elastic portion 2 comprises a plastic material the plastic is injection molded over the vibration absorbing portion 3. This portion comprises protrusions 2a and 2b to correspond to the indentations 1a and 1b in the single body magnet 1. The protrusions 2a and 2b are configured to engage in the indentations 1a and 1b of the single body magnet 1 to securely fix the magnet onto the non-elastic portion 2.

In one embodiment the non-elastic portion 2 comprises of aluminum. The portion may be glued on the surface of the vibration absorption portion 3. In the illustrated embodiment as shown in Fig. 10 the aluminum portion 40 may have through holes corresponding to the indentations 1a and 1b of the outer single body magnet 1. And the non-elastic aluminum portion 40 may be injection molded together with the inner vibration absorption portion 3 and the melted resin of the vibration absorption portion 3 fills the through holes in the aluminum portion 40 and protrude outwardly and forms protrusions outside the non-elastic portion (aluminum) corresponding to the indentations 1a and 1b of the single body magnet 1.

### Single body magnet

In the illustrated embodiment as shown in Figs. 7 through 10, the single body magnet 1 comprises polar anisotropic magnet. The magnet is configured to be thick enough to complete the magnetic field 101 without a ferromagnetic core inside the magnet. In one embodiment the single body magnet is a single body annular magnet. In other embodiments single body magnet comprises two or more annular magnet portions with the length from about 25mm to about 30mm aligned together. There may be indentations 1a and 1b formed on the inner surface of the single body magnet that are aligned with the protrusions 2a and 2b on the outer circumference of non-elastic portion 2. The alignment of the indentations 1a and 1b of the single body magnet 1 and the protrusions 2a and 2b of the non-elastic portion 2 is configured to fix the single body magnet 1 on the non-elastic portion 2. When the vibration absorption portion 6 (in Fig. 5) substantially free of an elastic material is used for the vibration absorption portion and, thus, the on-elastic portion 2 is absent, the single body magnet 1 may be fixed on vibration absorption portion 6 with adhesives.

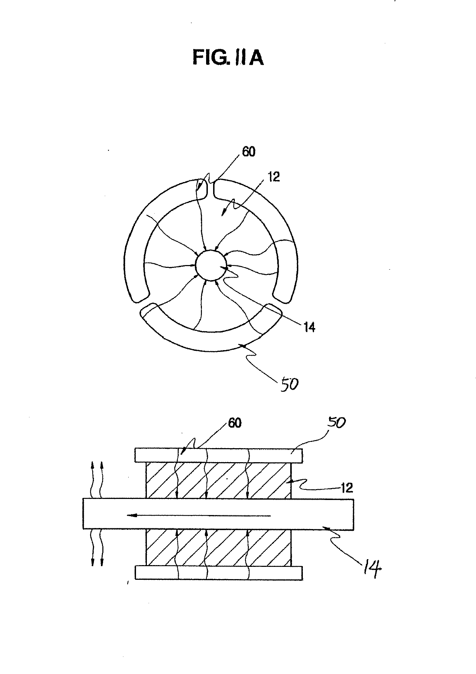

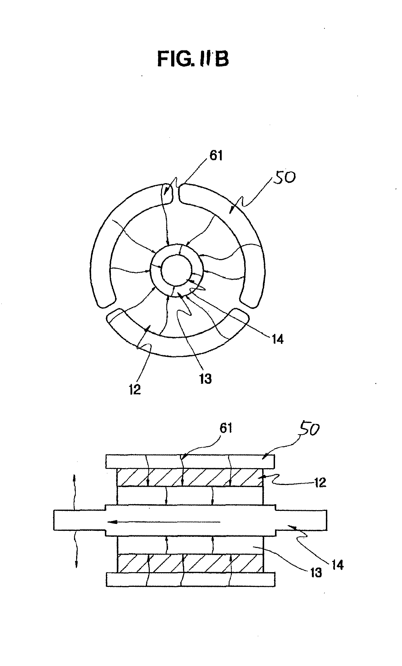

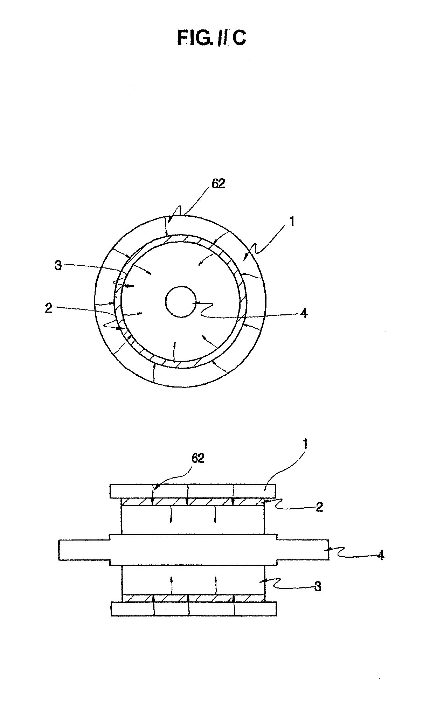

Figs. 11A through 11C illustrate the simulated drawings for vibration being transferred to the shaft 4. As shown in Fig. 11A, vibrations 60 during the operation of an electric motor travel through magnet body 50 and ferromagnetic core 12 and finally transferred to a shaft 14. Fig. 11b illustrates an example where a rubber or a vibration absorbing part 13 is interposed between a ferromagnetic core 12 and a shaft 14. There are less vibrations being transferred to the shaft 14 as vibrations 61 are absorbed in some degree by the vibration absorbing part 13. However, the vibration absorbing part 13 is not thick enough to absorb all the vibrations as ferromagnetic core 12 needs to comprise enough thickness to complete magnetic circuits with the stator of an electric motor. Fig. 11C illustrates an embodiment of the present disclosure. The vibration absorption portion 3 absorbs substantially all of the vibrations 62 generated from the gaps between the rotor and a stator of the motor. The shaft 4 is substantially free of these vibrations 62.

While this disclosure has been particularly shown and described with reference to exemplary embodiments thereof, it will be understood by those skilled in the art that various changes in form and details may be made therein without departing from the spirit and scope of the disclosure as defined by the appended claims.

## Claims

1. A rotor of a brushless motor, comprising:
a shaft elongated in a rotational axis;
a single body magnet comprising alternately magnetized portions; and
a vibration absorption portion interposed between the shaft and single body magnet.

2. The rotor of Claim 1, wherein the single body magnet comprises a ring magnet surrounding at least a portion of the shaft.

3. The rotor of Claim 2, wherein the ring magnet comprises two or more annular magnet portions arranged along the axis.

4. The rotor of Claim 2, wherein the ring magnet comprises a plurality of poles extending generally parallel to each other.

5. The rotor of Claim 1, wherein the single body magnet comprises a C shaped cross-section taken in a plane perpendicular to the axis.

6. The rotor of Claim 1, wherein the single body magnet does not form a closed loop surrounding the shaft, wherein the rotor further comprises one or more additional single body magnets, each additional single body permanent magnet comprising alternately magnetized portions.

7. The rotor of Claim 6, wherein the single body magnets are arranged along the axis.

8. The rotor of Claim 1, wherein the vibration absorption portion comprises an annular body and is surrounding the shaft.

9. The rotor of Claim 8, wherein the vibration absorption portion is engaged with the shaft.

10. The rotor of Claim 8, further comprising an engagement enhancing layer fixed to a circumference of the shaft, wherein the vibration absorption portion is engaged with the shaft via the engagement enhancing layer.

11. The rotor of Claim 1, wherein the vibration absorption portion comprises an elastic material.

12. The rotor of Claim 11, further comprising a non-elastic portion interposed between the single body magnet and the vibration absorption portion, wherein the non-elastic portion does not comprise an elastic material.

13. The rotor of Claim 12, wherein the non-elastic portion is annular and surrounding the vibration absorption portion.

14. The rotor of Claim 12, wherein the non-elastic portion is not annular while being interposed between the single body magnet and the vibration absorption portion.

15. The rotor of Claim 12, wherein the non-elastic portion comprises a ferromagnetic material.

16. The rotor of Claim 12, wherein the non-elastic portion does not comprise a ferromagnetic material.

17. The rotor of Claim 11, further comprising a non-elastic portion interposed between the single body magnet and the vibration absorption portion, wherein the non-elastic portion is substantially non-elastic and configured to minimize transferring of a force of radial expansion of the vibration absorption portion to the single body magnet while the rotor is rotating.

18. The rotor of Claim 17, wherein the non-elastic portion is engaged with the single body magnet.

19. The rotor of Claim 18, wherein the non-elastic portion comprises at least one of protrusion and recess on an outer circumference, wherein the single body magnet comprises at least one counterpart configuration configured to engage with the at least one of protrusion and recess.

20. The rotor of Claim 11, further comprising a non-elastic portion interposed between the single body magnet and the vibration absorption portion, wherein the non-elastic portion comprises one or more annular layers.

21. The rotor of Claim 20, wherein the non-elastic portion is engaged with the vibration absorption portion.

22. The rotor of Claim 21, wherein the non-elastic portion comprises at least one of protrusion and recess on an inner circumference, wherein the vibration absorption portion comprises at least one counterpart configuration configured to engage with the at least one of protrusion and recess.

23. The rotor of Claim 1, wherein the vibration absorption portion is not annular while being interposed between the shaft and the single body magnet.

24. The rotor of Claim 1, wherein the vibration absorption portion is substantially free of an elastic material.

25. The rotor of Claim 1, wherein the vibration absorption portion comprises a pored structure.

26. The rotor of Claim 25, wherein the pored structure comprises a plurality of networked walls defining pores.

27. A brushless motor comprising:
the rotor of Claim 1; and
a stator comprising at least two electric magnets.
